# EUROPEAN PATENT APPLICATION

(11) **EP 1 524 176 A1**
(43) Date of publication of application: **20.04.2005**
(21) Application number: 04256398.1
(22) Date of filing: 18.10.2004
(51) Int. Cl.: B62D 65/00, B62D 23/00

(54) **Method of manufacturing a frame assembly**

(30) Priority: 17.10.2003 US 512167
(71) Applicant: DANA CORPORATION, Toledo, OH 43697 (US)
(72) Inventor: McGill, Scott M, Kenilworth, Pennsylvania 19465 (US); Simboli, Andrew R, Tucson, Arizona 85747 (US); Rager, Christopher A, Womelsdorf, Pennsylvania 19567 (US)
(74) Representative: Giles, Ashley Simon

(57) **Abstract**

A method of manufacturing a frame assembly includes the steps of providing an underbody assembly (15) including a plurality of structural components that are secured together so as to be generally planar in shape; providing first and second sidebody assemblies (10a,10b) that each include a plurality of structural components that are secured together so as to be generally planar in shape; and securing the underbody assembly (15) to the first and second sidebody assemblies (10a,10b) to form a frame assembly. The underbody assembly can be formed by securing first and second longitudinally extending, closed channel beams (10a,10b) to a plurality of closed channel cross members (11a,11b). Each of the sidebody assemblies can be formed by securing a closed channel lower rocker rail (20) and closed channel upper roof rail (21) to a plurality of pillars (24a,25a,26a). Each of the pillars can be formed by initially securing a first stamping to the lower rocker rail (20) and the upper roof rail (21), then securing a second stamping to each of the first stampings. The underbody assembly can be secured to the first and second sidebody assemblies by magnetic pulse welding to form the frame assembly.

## Description

### BACKGROUND OF THE INVENTION

This invention relates in general to methods of manufacturing frame assemblies. In particular, this invention relates to an improved method of manufacturing a vehicular frame assembly that facilitates the manufacture of fast-to-market, low-volume, customized vehicles in a cost-effective manner.

Many land vehicles in common use, such as automobiles, vans, and trucks, include a frame assembly that is supported upon a plurality of ground-engaging wheels by a resilient suspension system. The structures of known frame assemblies can be divided into two general categories, namely, separate and unitized. In a typical separate frame assembly, the structural components of the frame portion of the vehicle are separate and independent from the structural components of the body portion of the vehicle. When assembled, the frame portion of the assembly is resiliently supported upon the vehicle wheels by the suspension system and serves as a platform upon which the body portion of the assembly and other components of the vehicle can be mounted. Separate frame assemblies of this general type are found in most older vehicles, but remain in common use today for many relatively large or specialized use modem vehicles, such as large vans, sport utility vehicles, and trucks. In a typical unitized frame assembly, sometimes referred to as a space frame assembly, the structural components of the body portion and the frame portion are combined into a single integral unit that is resiliently supported upon the vehicle wheels by the suspension system. Unitized frame assemblies of this general type are found in many relatively small modem vehicles, such as automobiles and minivans.

Traditionally, a vehicular or other type of frame assembly has been manufactured by providing a plurality of stamped structural components, supporting some or all the structural components on a fixture in a desired orientation relative to one another, and securing the structural components together in the desired orientation using traditional welding techniques, such as by resistance spot welding. Often, the stamped structural components are sequentially joined together by laying them on the vehicle piecemeal (or in large, semi-rigid subassemblies), one layer on top of another with each layer being welded to one or more of the previous layers. This manufacturing method results in a variety of unfavorable conditions. First, the number of discrete structural components is very large, requiring a large number of stamping tools, assembly fixtures, and welders to assemble them. Also, a relatively lengthy set-up time is necessary to properly support the plurality of structural components in the desired orientations prior to securement. Although at least some of these numerous structural components could be combined into relatively large, monolithic stampings to facilitate the assembly process, the manufacture of such physically large stampings would likely require enormous and expensive tools and presses. Second, a large amount of the welding of the assembly must typically take place in the final manufacturing location (i.e., not at the manufacturing location of a supplier to its customer). This increases the amount of capital and tooling that is required by the customer to manufacture the frame assemblies and reduces the opportunities for outsourcing from the customer to the supplier. Third, resistance spot welding and other conventional welding techniques typically have a relatively long cycle time, resulting in low weld speeds. Also, the weld tips usually require frequent maintenance in the form of cleaning and dressing, which further hampers productivity. These cleaning issues, while a minor inconvenience with steel alloys, can become more pronounced with coated steels or aluminum structures. Also, the use of traditional welding processes, such as resistance spot welding, usually requires physical access to both sides of the structural components to be joined, which can be problematic. Fourth, the opportunity of a supplier to supply large, value added modular components to a customer is diminished because the number of structure components that can be integrated into a subassembly in the supplier's manufacturing location is severely limited by weld access. Lastly, those subassemblies that are manufactured at the supplier's manufacturing location will be somewhat flexible and, therefore, not fully structurally sound during transit from the supplier's manufacturing location to the customer's manufacturing location, thus presenting the potential for damage in transit that can result in quality issues. Thus, although this traditional method of frame manufacture has functioned satisfactorily, particularly in the manufacture of high volumes of a single frame assembly structure, it has been found that this traditional method does not readily lend itself to the efficient manufacture of fast-to-market, low-volume, customized vehicle or other frame assemblies.

More recently, it has been proposed to manufacture a vehicular or other frame assembly using modular techniques. For example, it has been proposed to manufacture a vehicular frame assembly by initially manufacturing an underbody assembly and a pair of bodyside assemblies, then joining the underbody and bodyside assemblies together to form the vehicular frame assembly. However, known methods of manufacturing the frame assembly using modular techniques have suffered from the same deficiencies as the traditional method for manufacturing the frame assembly described above. Thus, it would be desirable to provide an improved method of manufacturing a vehicular or other frame assembly that facilitates the manufacture of fast-to-market, low-volume, customized vehicles or other articles in a cost-effective manner, without compromising styling and performance.

### SUMMARY OF THE INVENTION

This invention relates to an improved method of manufacturing a vehicular or other frame assembly that facilitates the manufacture of fast-to-market, low-volume, customized frames or other articles in a cost-effective manner, without compromising styling and performance. The method of manufacturing the frame assembly includes the steps of providing an underbody assembly including a plurality of structural components that are secured together so as to be generally planar in shape; providing first and second sidebody assemblies that each include a plurality of structural components that are secured together so as to be generally planar in shape; and securing the underbody assembly to the first and second sidebody assemblies to form a frame assembly. The underbody assembly can be formed by securing first and second longitudinally extending, closed channel beams to a plurality of closed channel cross members. Each of the sidebody assemblies can be formed by securing a closed channel lower rocker rail and closed channel upper roof rail to a plurality of pillars. Each of the pillars can be formed by initially securing a first stamping to the lower rocker rail and the upper roof rail, then securing a second stamping to each of the first stampings. The underbody assembly can be secured to the first and second sidebody assemblies by magnetic pulse welding to form the frame assembly.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a perspective view illustrating a first step in a method of manufacturing an underbody assembly for use in a vehicle frame assembly in accordance with this invention.

Fig. 2 is a perspective view illustrating a second step in a method of manufacturing an underbody assembly for use in a vehicle frame assembly in accordance with this invention.

Fig. 3 is a perspective view illustrating a third step in a method of manufacturing an underbody assembly for use in a vehicle frame assembly in accordance with this invention.

Fig. 4 is a perspective view illustrating a fourth step in a method of manufacturing an underbody assembly for use in a vehicle frame assembly in accordance with this invention.

Fig. 5 is a perspective view illustrating a fifth step in a method of manufacturing an underbody assembly for use in a vehicle frame assembly in accordance with this invention.

Fig. 6 is a side elevational view of a plurality of underbody assemblies that have been manufactured in accordance with the steps illustrated in Figs. 1 through 5, shown stacked and nested within one another.

Fig. 7 is a perspective view illustrating a first step in a method of manufacturing a pair of bodyside assemblies for use in a vehicle frame assembly in accordance with this invention.

Fig. 8 is a perspective view illustrating a second step in a method of manufacturing a pair of bodyside assemblies for use in a vehicle frame assembly in accordance with this invention.

Fig. 9 is a perspective view illustrating a third step in a method of manufacturing a pair of bodyside assemblies for use in a vehicle frame assembly in accordance with this invention.

Fig. 10 is a side elevational view of one of the bodyside assemblies illustrated in Fig. 9.

Fig. 11 is a side elevational view similar to Fig. 10 of a first alternative embodiment of one of the bodyside assemblies.

Fig. 12 is a side elevational view similar to Fig. 10 of a second alternative embodiment of one of the bodyside assemblies.

Fig. 13 is a side elevational view similar to Fig. 10 of a third alternative embodiment of one of the bodyside assemblies.

Fig. 14 is a side elevational view similar to Fig. 10 of a fourth alternative embodiment of one of the bodyside assemblies.

Fig. 15 is a perspective view illustrating a first step in a method of manufacturing a vehicle frame assembly in accordance with this invention.

Fig. 16 is a perspective view illustrating a second step in a method of manufacturing a vehicle frame assembly in accordance with this invention.

Fig. 17 is a perspective view illustrating a third step in a method of manufacturing a vehicle frame assembly in accordance with this invention.

### DETAILED DESCRIPTION OF THE PREFERRED EMBODIMENTS

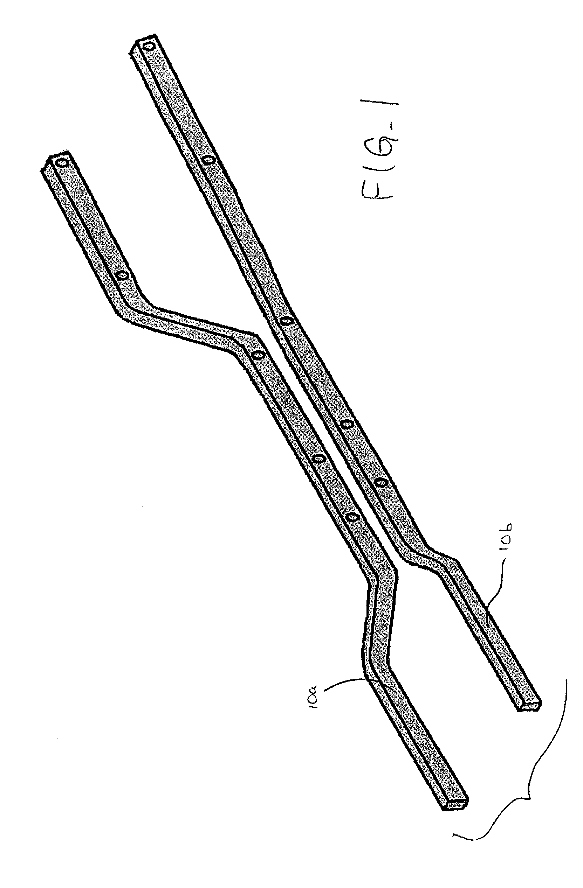

Referring now to the drawings, there is illustrated in Figs. 1 through 5 a method of manufacturing an underbody assembly for use in a vehicle or other frame assembly in accordance with this invention. In a first step of the method illustrated in Fig. 1, first and second longitudinally extending beams 10a and 10b are provided. The first and second longitudinal beams 10a and 10b can be formed from any desired material or combination of materials and may have any desired shape or shapes, including different shapes than as shown. Each of the illustrated first and second longitudinal beams 10a and 10b is formed from a single, closed channel structural member. However, either or both of the first and second longitudinal beams 10a and 10b can be formed from an assembly of multiple pieces. Furthermore, either or both of the first and second longitudinal beams 10a and 10b can be formed either partially or completely from open channel structural members. In the illustrated embodiment, the first and second longitudinal beams 10a and 10b are shown positioned in a side-by-side manner, which can be achieved by appropriate fixtures. However, it will be appreciated that the first and second longitudinal beams 10a and 10b can be positioned in any desired orientation relative to one another, and further may be positioned at separate workstations, at least during the initial steps of the assembly method of this invention.

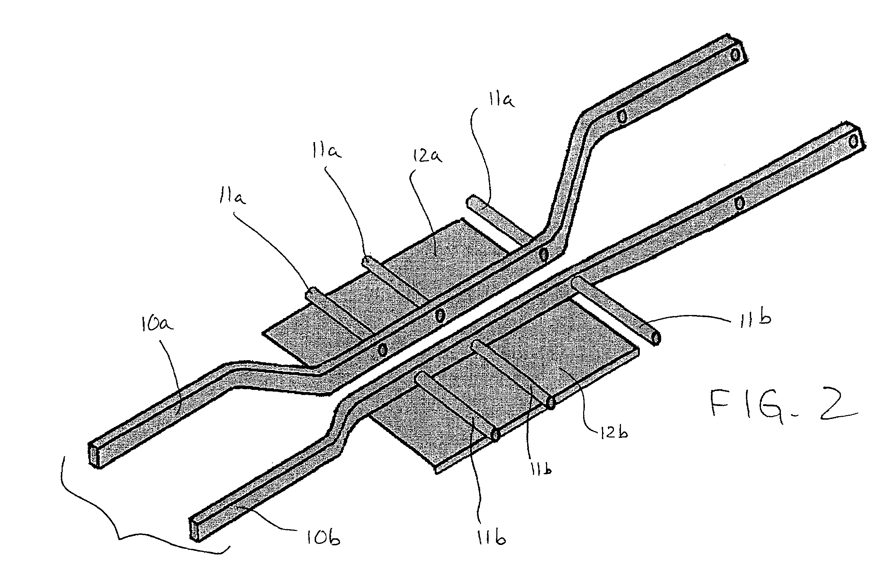

Fig. 2 illustrates a second step in a method of manufacturing an underbody assembly for use in a vehicle or other frame assembly in accordance with this invention. As shown therein, a first plurality of floor cross members 11a and a first floor pan subassembly 12a are secured to the first longitudinal beam 10a. Similarly, a second plurality of floor cross members 11b and a second floor pan subassembly 12b are secured to the second longitudinal beam 10b. Each of the illustrated floor cross members 11a and 11b is formed from a single, closed channel structural member. However, some or all of the floor cross members 11a and 11b can be formed either partially or completely from open channel structural members. The floor cross members 11a and 11b can be formed from any desired material or combination of materials and can be respectively secured to the first and second longitudinal beams 10a and 10b by any desired method, such as by magnetic pulse welding. Similarly, the floor pan subassemblies 12a and 12b can be formed from any desired material or combination of materials and can be respectively secured to the first and second longitudinal beams 10a and 10b and to the floor cross members 11a and 11b by any desired method, such as by resistance spot welding.

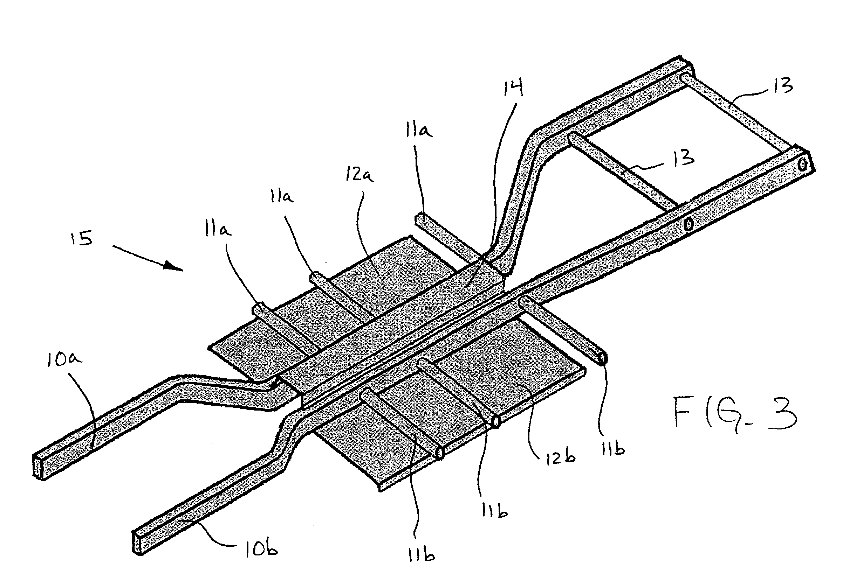

Fig. 3 illustrates a third step in a method of manufacturing an underbody assembly for use in a vehicle or other frame assembly in accordance with this invention. As shown therein, a plurality of cross members 13 and a center tunnel subassembly 14 are secured to the first and second longitudinal beams 10a and 10b. Each of the illustrated cross members 13 is formed from a single, closed channel structural member. However, some or all of the cross members 13 can be formed either partially or completely from open channel structural members. The cross members 13 can be formed from any desired material or combination of materials and can be respectively secured to the first and second longitudinal beams 10a and 10b by any desired method, such as by magnetic pulse welding. Similarly, the tunnel subassembly 14 can be formed from any desired material or combination of materials and can be secured to the first and second longitudinal beams 10a and 10b by any desired method, such as by resistance spot welding. The joining of the first and second longitudinal beams 10a and 10b by the plurality of cross members 13 and the center tunnel subassembly 14 provides a basic underbody assembly, indicated generally at 15.

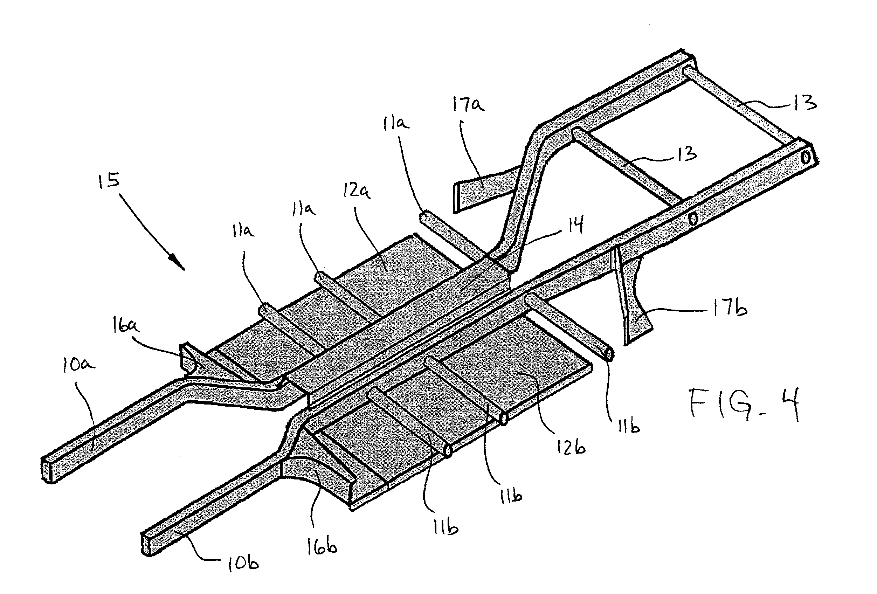

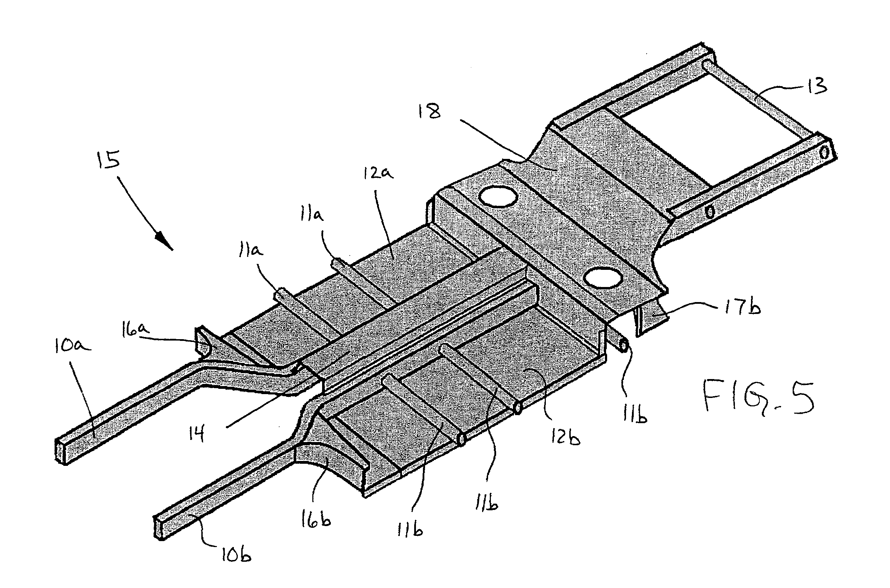

Fig. 4 illustrates a fourth step in a method of manufacturing an underbody assembly for use in a vehicle or other frame assembly in accordance with this invention. As shown therein, a pair of front torque box lower panels 16a and 16b are secured to the front end of the underbody assembly 15, and a pair of rear torque box lower panels 17a and 17b are secured to the rear end of the underbody assembly 15. The front and rear torque box lower panels 16a, 16b and 17a, 17b can be formed from any desired material or combination of materials and can be secured to the underbody assembly 15 by any desired method, such as by resistance spot welding. Similarly, Fig. 5 illustrates a fifth step in a method of manufacturing an underbody assembly for use in a vehicle or other frame assembly in accordance with this invention. As shown therein, a rear seat panel 18 is secured to the underbody assembly 15. The rear seat panel 18 can be formed from any desired material or combination of materials and can be secured to the underbody assembly 15 by any desired method, such as by resistance spot welding. The finished underbody assembly 15 illustrated in Fig. 5 is intended to be representative of any desired structure for an underbody assembly for use in a vehicle frame assembly.

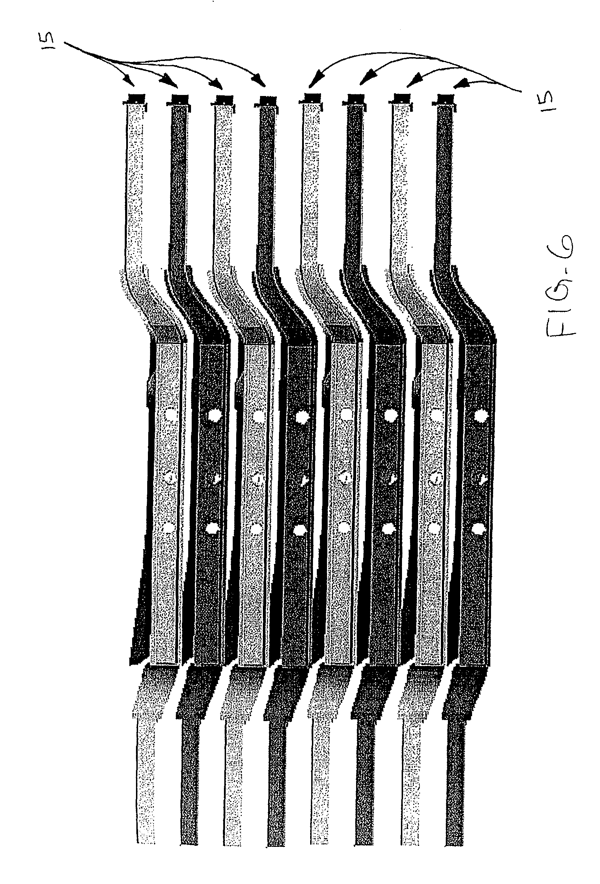

Fig. 6 is a side elevational view of a plurality of underbody assemblies 15 that have been manufactured in accordance with the steps illustrated in Figs. 1 through 5, wherein the underbody assemblies 15 are shown stacked and nested within one another. As is apparent from this and from Figs. 1 through 5, each of the underbody assemblies 15 is generally planar in shape, having a length and a width that are both substantially greater than a depth thereof. Such a generally planar structure is important for the underbody assemblies 15 because it facilitates stacking of a plurality of such underbody assemblies 15 in a space-saving manner, as clearly shown in Fig. 6. As a result, the shipment of the underbody assemblies 15 from a first location, such as a supplier manufacturing location where the underbody assemblies 15 are manufactured as described above, to a second location, such as a customer manufacturing location where the underbody assemblies 15 are assembled with other subassemblies to form a vehicular frame assembly as described below, is greatly facilitated. Also, the storage of such underbody assemblies 15 at both the first and second locations, is also greatly facilitated. Lastly, because all of the primary structural components of the underbody assembly 15 (i.e., the first and second longitudinal beams 10a and 10b, the floor cross members 11a and 11b, and the cross members 13) are formed from closed channel structural members, the underbody assembly 15 is inherently rigid, thus facilitating the transportation thereof from one manufacturing location to another and minimizing the potential for damage in transit that can result in quality issues.

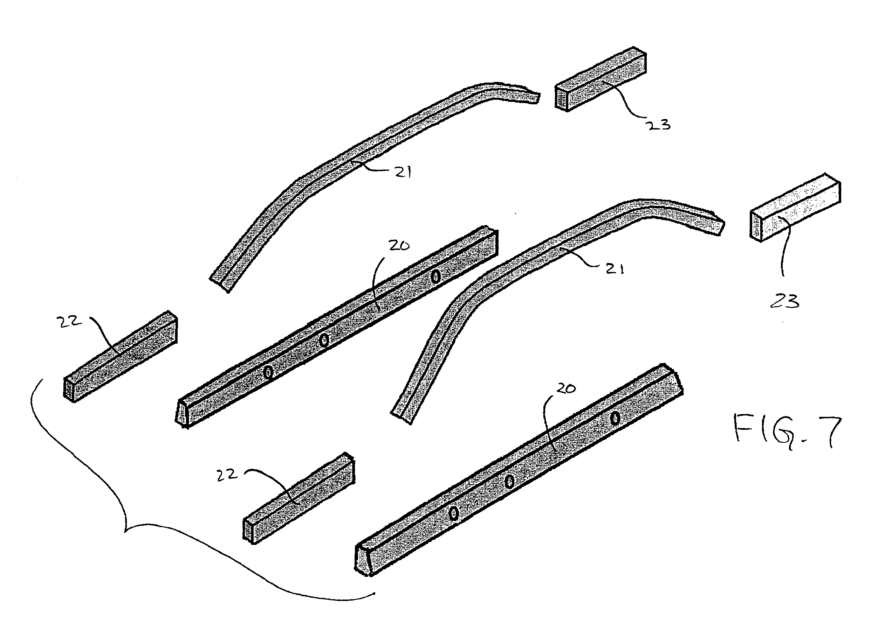

Referring now to Figs. 7 through 9, there is illustrated a method of manufacturing a bodyside assembly for use in a vehicle or other frame assembly in accordance with this invention. In a first step of the method illustrated in Fig. 7, a lower rocker rail 20, an upper roof rail 21, a front valence member 22, and a rear body side member 23 are provided for each of two bodyside assemblies to be manufactured. The lower rocker rail 20, the upper roof rail 21, the front valence member 22, and the rear body side member 23 can be formed from any desired material or combination of materials and may have any desired shape or shapes, including different shapes than as shown. The lower rocker rails 20 and the upper roof rails 21 extend generally straight and parallel to one another. Each of the illustrated lower rocker rails 20 and the upper roof rails 21 is formed from a single, closed channel structural member. However, either or both of the lower rocker rails 20 and the upper roof rails 21 can be formed from an assembly of multiple pieces. Furthermore, either or both of the lower rocker rails 20 and the upper roof rails 21 can be formed either partially or completely from open channel structural members. The lower rocker rail 20 and the upper roof rail 21 can be formed or cut to length, allowing flexibility in the longitudinal length, or wheelbase, of the vehicle.

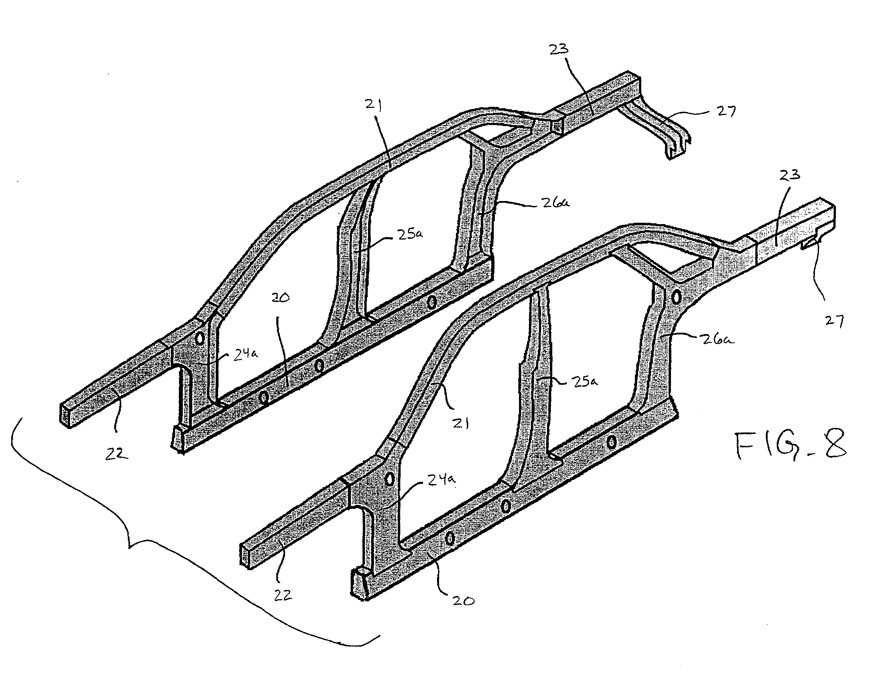

Next, as shown in Fig. 8, a plurality of outer pillar members 24a, 25a, and 26a is provided that extend generally vertically between the lower rocker rail 20 and the upper roof rail 21. The outer pillar members 24a, 25a, and 26a can be positioned as desired relative to the lower rocker rail 20 and the upper roof rail 21 to provide flexibility in the styling and contour of the vehicle. Additionally, as will be explained in detail below, several types of vehicles can be constructed from the baseline structure described above by rearranging the existing components or by adding different components. In the illustrated embodiment, each of the outer pillar members 24a, 25a, and 26a is formed from a stamping, although such is not required. The outer pillar members 24a, 25a, and 26a can be formed from any desired material or combination of materials and may have any desired shape or shapes, including different shapes than as shown. The outer pillar members 24a, 25a, and 26a can be respectively secured to the lower rocker rail 20 and the upper roof rail 21 by any desired method, such as by resistance spot welding. Other components, such as shown at 27, can also be secured to the rear body side members 23 or other portions of the assembly as desired.

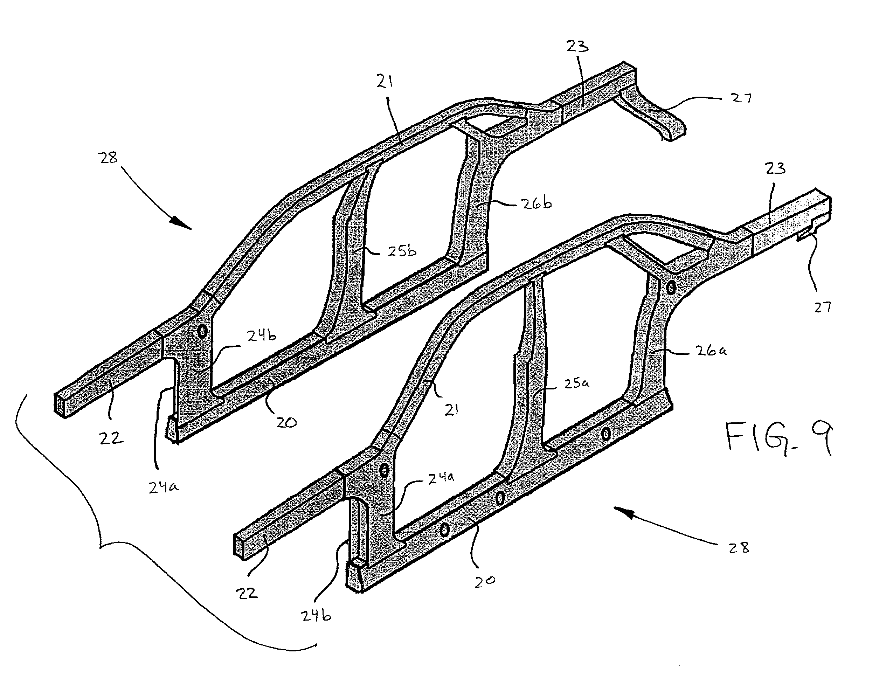

Then, as shown in Fig. 9, vertical closure panels 24b, 25b, and 26b are respectively secured to each of the plurality of outer pillar members 24a, 25a, and 26a to complete a pair of bodyside assemblies, each indicated generally at 28. In the illustrated embodiment, each of the vertical closure panels 24b, 25b, and 26b is formed from a stamping, although such is not required. The vertical closure panels 24b, 25b, and 26b can be formed from any desired material or combination of materials and may have any desired shape or shapes, including different shapes than as shown. The vertical closure panels 24b, 25b, and 26b can be respectively secured to the outer pillar members 24a, 25a, and 26a by any desired method, such as by resistance spot welding.

Similar to the underbody assembly 15 described above, each of the bodyside assemblies 28 is generally planar in shape, having a length and a width that are both substantially greater than a depth thereof. Such a generally planar structure is important for the bodyside assemblies 28 because it facilitates stacking of a plurality of such bodyside assemblies 28 in a space-saving manner. As a result, the shipment of the bodyside assemblies 28 from a first location, such as a supplier manufacturing location where the bodyside assemblies 28 are manufactured as described above, to a second location, such as a customer manufacturing location where the bodyside assemblies 28 are assembled with other subassemblies to form a vehicular frame assembly as described below, is greatly facilitated. Also, the storage of such bodyside assemblies 28 at both the first and second locations, is also greatly facilitated. Lastly, because all of the primary structural components of the bodyside assembly 28 (i.e., the lower rocker rail 20, the upper roof rail 21, the front valence member 22, and the rear body side member 23, as well as the combinations of the outer pillar members 24a, 25a, and 26a and the vertical closure panels 24b, 25b, and 26b) are formed from closed channel structural members, the bodyside assembly 28 is inherently rigid, thus facilitating the transportation thereof from one manufacturing location to another and minimizing the potential for damage in transit that can result in quality issues.

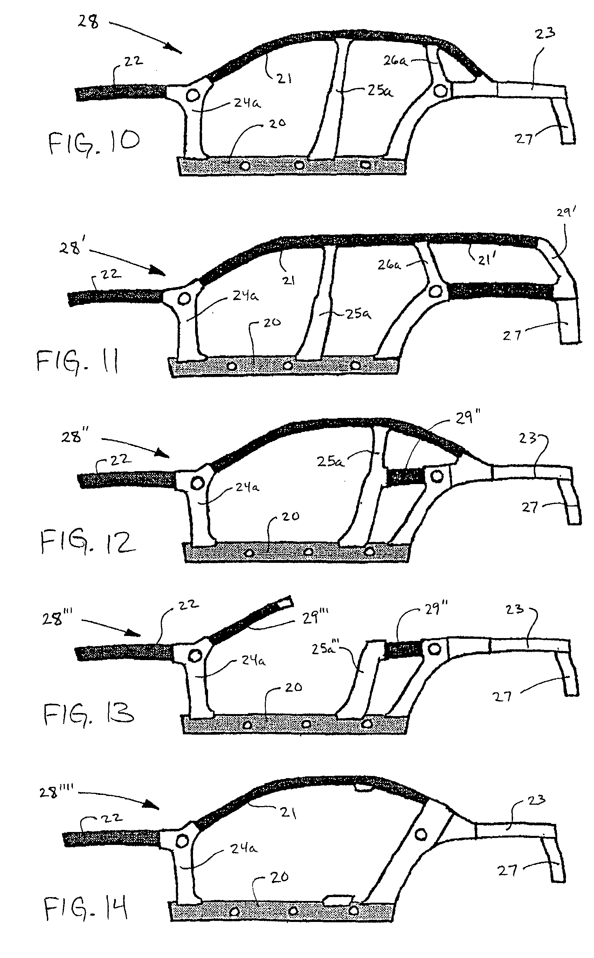

Fig. 10 is a side elevational view of one of the bodyside assemblies 28 shown in Fig. 9. The illustrated bodyside assembly 28, which can be considered as a baseline model for this general bodyside design, is a relatively small four-door sedan and includes the rocker rail 20, the roof rail 21, the front valence 22, the rear body side member 23, and multiple vertical pillars, as described above. As is well known in the art of manufacturing vehicular frame assemblies, the four vertical pillars illustrated in Fig. 10 can be referred to, from front to rear, as A, B, C, and D pillars. In the illustrated design, the C pillar has both an upper and a lower section. There are several features in this general bodyside design that contribute to its flexibility. First, the rocker rail 20 is a horizontal straight member having a generally constant cross sectional shape along a large part of its length. Also, the roof rail 21 has a straight section that runs parallel to the rocker rail 20 and also has a generally constant cross sectional shape. Finally, the C pillar upper section is relatively straight and is oriented in a vertical or near vertical position. The horizontal roof rail 21 gives flexibility to the styling of the car. The horizontal roof rail 21 allows facilitates the use of different curvatures in the styling of the roof, whereas if the roof rail 21 was itself curved, the styling of the roof would likely follow the curvature of the roof rail 21 with only a little room for variability. An added benefit to using horizontal rocker and roof rails 20 and 21 is wheelbase flexibility. The wheelbase of the vehicle can be changed simply by substituting respectively longer or shorter rocker and roof rails 20 and 21. If the rocker and roof rails 20 and 21 are formed by roll-forming or extrusion, then they can simply be cut to different lengths during their manufacture. If the rocker and roof rails 20 and 21 are formed by stamping or hydroforming, then modular tooling can be used. The C pillar upper section provides a similar benefit to styling as the flat roof rail. The outer "skin" of the vehicle can be used to define the slope of the rear window independent of the underlying frame structure. The slope can vary from a vertical position, which matches the orientation of the illustrated C pillar upper section, to an extremely tapered slope. The rear styling could also be defined by the rear window itself, i.e., a wrap-around rear window or a hatchback. Many other options can be considered by varying the shape of the outer skin and the rear glass.

As shown in Figs. 11 through 14, several other types of vehicle can be readily constructed from the baseline model for the general bodyside design illustrated in Fig. 9. Each of the other types of vehicles share a majority of structural components with the baseline model and can be constructed simply by rearranging the existing structure and by adding or swapping structural components. For example, as shown in Fig. 11, the sedan bodyside subassembly 28 can be converted into a station wagon bodyside subassembly 28' simply by adding a roof rail extension 21' and a D pillar extension 29'. The station wagon bodyside subassembly 28' would have a longer flatter roof than the sedan bodyside subassembly 28, but the underlying structure is virtually unaffected by the difference in roof line.

As shown in Fig. 12, the sedan bodyside subassembly 28 could be converted into two-door coupe bodyside subassembly, indicated generally at 28", by relocating the B pillar rearwardly and adding a body side member 29". The nature of the rocker rail 20 and the roof rail 21 (both being straight and parallel with relatively constant cross sections) allows the same B pillar structure to be used at any location their length.

As shown in Fig. 13, the two-door coupe bodyside subassembly 28" can be rearranged to a convertible bodyside subassembly, indicated generally at 28"', by swapping the B pillar 25a for a half-pillar 25a'" and swapping the roof rail 21 with a stand alone A pillar upper 29"'.

Lastly, as shown in Fig. 14, the two-door coupe bodyside subassembly 28" can alternatively be arranged in a four-door, B pillarless configuration (such as might be used for supporting a reverse opening rear door) simply by removing the B pillar structure 25a entirely. Reinforcements can be added around the C pillar and door latch area.

It can be seen that each of the illustrated bodyside assemblies discussed above includes a plurality of closed channel tubular components that are joined by a plurality of open channel stampings or stamped subassemblies. Tubular components are preferably used for the main longitudinal beams in the structure. This structure has two advantages. One, it reduces the number of physically large components. Second, by replacing the conventional large stampings (which have long seams for joining via spot welding) with the tubular components, the overall amount of joining processes that are required to assemble the bodyside assemblies is reduced. The tubular components may be manufactured by draw bending standard tubes (such as round or square section), hydroforming, or by roll forming and stretch bending. Roll forming and bending does not require tooling or machinery on the order of large stampings to manufacture. The tubular longitudinal components can be joined together by stamped components or subassemblies of stamped components.
Stampings can be used to form elements of the structure including, but not limited to, the A, B, C, and D pillars, or similar vertical structures. Each vertical member includes an inner and outer stamping, forming a fully closed cross section after assembly. These vertical components are preferably provided as stampings because their cross sectional shapes can vary significantly from top to bottom, and this is not easily accommodated by tubular parts of constant or near constant cross sectional shape. The various stamped components can be joined to the tubular components via MIG welding, MIG brazing, laser welding, or any other joining process that preferably requires only single sided access. Stamped components may be joined to other stamped components by MIG welding, MIG brazing, or laser welding. Alternatively, conventional resistance spot welding or any other technique applicable to a joint with access from both sides can be used. The bodyside assembly would be inherently rigid because after assembly, all of the major components will have closed cross sections. Finally, the bodyside assembly would be a complete unit that could be manufactured by a supplier, shipped to a customer's final assembly location, and fixed to an underbody structure in a single assembly station, acknowledging that additional operations may be required to fully join the bodyside assemblies.

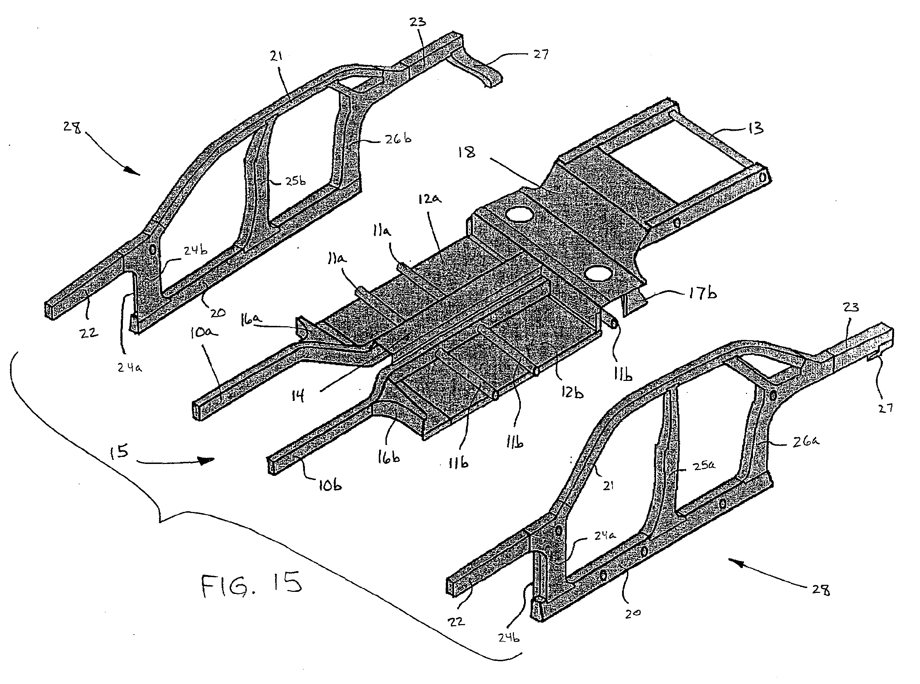

Referring now to Figs. 15, 16, and 17, there is illustrated a method of manufacturing a vehicle frame assembly in accordance with this invention. In a first step of the method illustrated in Fig. 15, an underbody assembly 15 and a pair of bodyside assemblies 28 are initially provided. The underbody assembly 15 can, if desired, be manufactured in accordance with the method described above and illustrated in Figs. 1 through 5. Similarly, each of the bodyside assemblies 28 can, if desired, be manufactured in accordance with the method described above and illustrated in Figs. 7 through 9. As discussed above, one of the advantage of manufacturing the underbody assembly 15 and the pair of bodyside assemblies 28 in accordance with the disclosed methods that they are inherently rigid, thus facilitating the transportation thereof from one manufacturing location to another and minimizing the potential for damage in transit that can result in quality issues. However, the underbody assembly 15 and the bodyside assemblies 28 can be manufactured in any desired manner.

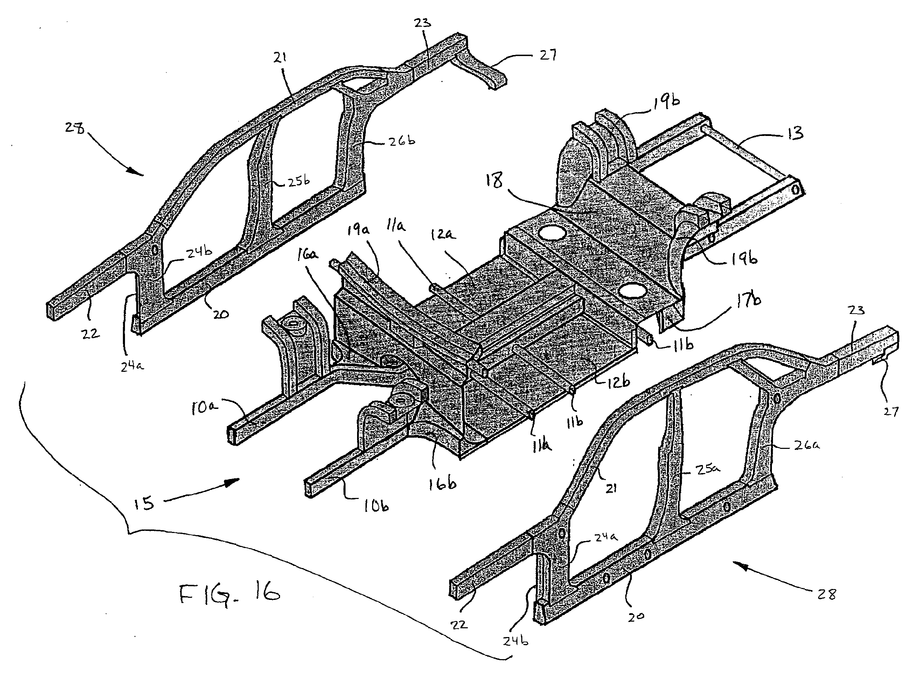

The underbody assembly 15 and the bodyside assemblies 28 are initially aligned laterally with one another, as shown in Fig. 15, before being secured together in the manner described below. Prior to being secured together, one or more additional components can, if desired, be secured to the underbody assembly 15, as shown in Fig. 16. In the illustrated embodiment, a front dash subassembly 19a and a pair of rear wheelhouse subassemblies 19b are secured to the underbody assembly 15. The illustrated front dash subassembly 19a and rear wheelhouse subassemblies 19b are formed from stampings, although such is not required. The front dash subassembly 19a and rear wheelhouse subassemblies 19b can be formed from any desired material or combination of materials and may have any desired shape or shapes, including different shapes than as shown. The front dash subassembly 19a and rear wheelhouse subassemblies 19b can be respectively secured to the underbody assembly 15 by any desired method, such as by resistance spot welding. Other components (not shown) can be secured to the bodyside assemblies 28 as desired. Typically, these additional components are components that disturb the otherwise generally planar shapes of the underbody assembly 15 and the bodyside assemblies 28 described above. Thus, it is preferable that such additional components be secured to the underbody assembly 15 and the bodyside assemblies 28 at the final manufacturing location after shipment and storage for the sake of increase efficiency.

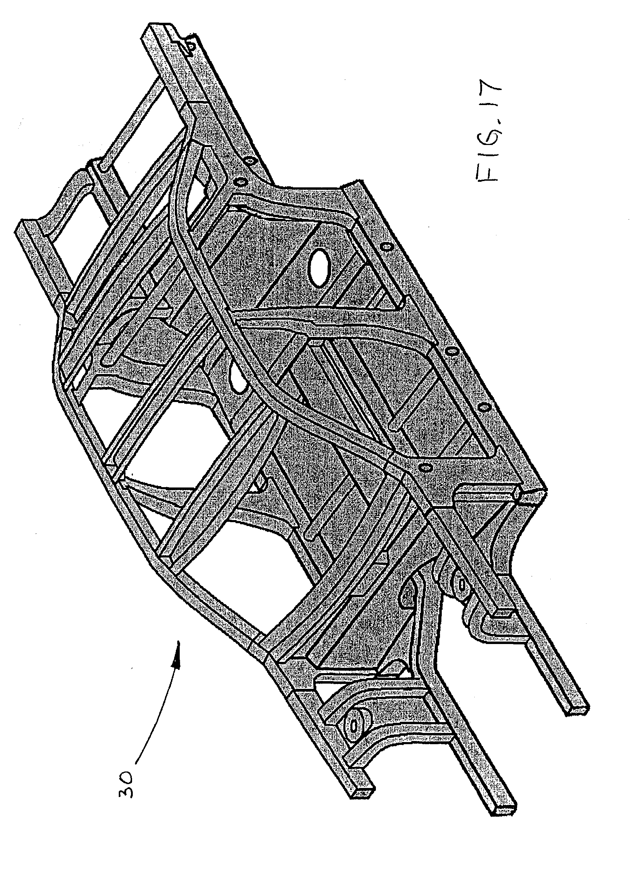

] Regardless of whether such additional components are added, the final step of the vehicle frame assembly process is shown in Fig. 17. As shown therein, the two bodyside assemblies 28 are secured to the lateral sides of the underbody assembly 15 to form a vehicle frame assembly, indicated generally at 30. The two bodyside assemblies 28 can be secured to the underbody assembly 15 by any desired method, such as by magnetic pulse welding and the like. For example, the pair of bodyside assemblies 28 can be secured to the underbody assembly at a magnetic pulse framing station, such as disclosed in co-pending Serial No. 10/639,305 filed on August 12, 2003. The disclosure of that pending application is incorporated herein by reference. If desired, other conventional components can be secured to portions of either or both of the underbody assembly 15 and the bodyside assemblies 28 to form the vehicle frame assembly 30, as shown in Fig. 17. Thereafter, the vehicle frame assembly 30 can be shipped as a unit to a customer or, if assembled by the customer, moved to the next manufacturing station.

In accordance with the provisions of the patent statutes, the principle and mode of operation of this invention have been explained and illustrated in its preferred embodiments. However, it must be understood that this invention may be practiced otherwise than as specifically explained and illustrated without departing from its spirit or scope.

## Claims

1. A method of manufacturing a frame assembly comprising the steps of:
(a) providing an underbody assembly including a plurality of structural components that are secured together so as to be generally planar in shape;
(b) providing first and second sidebody assemblies that each include a plurality of structural components that are secured together so as to be generally planar in shape; and
(c) securing the underbody assembly to the first and second sidebody assemblies to form a frame assembly.

2. The method defined in Claim 1 wherein said step (a) is performed by providing first and second longitudinally extending beams and by securing a plurality of cross members to the first and second longitudinally extending beams to form the underbody assembly.

3. The method defined in Claim 2 including the further step of providing the first and second longitudinally extending beams and the plurality of cross members as closed channel structural members.

4. The method defined in Claim 1 wherein said step (b) is performed by providing a lower rocker rail and an upper roof rail and by securing a plurality of pillars to the lower rocker rail and the upper roof rail to form each of the bodyside assemblies.

5. The method defined in Claim 4 including the further step of providing the lower rocker rail and the upper roof rail as closed channel structural members.

6. The method defined in Claim 5 including the further step of securing a first stamping to the lower rocker rail and the upper roof rail to form each of the pillars.

7. The method defined in Claim 6 including the further step of securing a second stamping to each of the first stampings to form a closed channel structural member for each of the pillars.

8. The method defined in Claim 1 wherein said step (c) is performed by magnetic pulse welding.
